# EUROPEAN PATENT SPECIFICATION

(11) **EP 0 469 364 B1**
(45) Date of publication and mention of the grant of the patent: **10.04.1996**
(21) Application number: 91111679.6
(22) Date of filing: 12.07.1991
(51) Int. Cl.: F16F 15/12, F16F 1/36, F16D 13/68, F16F 1/42, F16F 15/16

(54) **Method of forming and stressing composite springs**
Verfahren zur Herstellung und zum Spannen von Federn aus Faserverbundwerkstoffen
Procédé pour fabriquer et pour la mise sous tension de ressort en matières composites

(30) Priority: 30.07.1990 US 560407
(43) Date of publication of application: 05.02.1992
(73) Proprietor: EATON CORPORATION, Cleveland, Ohio 44114 (US)
(72) Inventor: Stretch, Dale Arden, Novi, Michigan 48375 (US)
(74) Representative: Wagner, Karl H.

(56) References cited:
- EP-A- 0 133 340
- DE-A- 2 716 233
- FR-A- 2 494 367
- FR-A- 2 611 013

## Description

### Field of the Invention

This invention relates to a composite spring for a torsional vibration damper mechanism. More specifically, the invention relates to such composite springs that are stressed in one direction.

### Background of the Invention

Torsional vibration damping mechanisms have long been used to reduce the adverse effects of torsional vibrations or fluctuating torques in vehicle drivelines. Such torsional vibrations or fluctuating torques, hereinafter referred to as torsionals, emanate primarily from engine power pulses and torque spikes, and from abrupt changes in driveline torque due primarily to rapid engine acceleration/deceleration and transmission ratio changes.

Such mechanisms commonly employ a spring(s) to attenuate torsionals and transmit positive and negative torque between the vehicle engine and wheels, and employ a damper assembly to control the rate of flexing of the springs. Examples of such mechanisms may be seen by reference to U.S. Patents 4,874,074 and 4,690,256; and French patent application 2,611,013.

The mechanisms in the U.S. documents each employ a nested pair of spiral wound springs formed of steel; these springs are designed to withstand flexing of forty or more degrees, flex radially inward and outward in response to increasing positive and negative torque, and are symmetrically balanced when paired.

The mechanism in the French Patent document showing the prior art defined by the preamble of claim 1 employs a single spiral wound spring formed of a composite material including a plurality of layers of reinforcing filaments bonded together by a plastic material; this spring has an unknown flex design limit, flexs radially inward and outward in response to increasing positive and negative torque, and is not per se symmetrically balanced.

The steel spiral wound springs in the mechanism of the U.S. patent documents have the disadvantage of increasing the inertia of the damping mechanism. The composite spring in the mechanism of the French patent document has the disadvantage of being per se symmetrically unbalanced, is difficult to install in a damper mechanism for flexing in only one direction, and is prone to delamination failure of the reinforcing filaments due to flexing in both directions.

Further attention is drawn to DE-OS-2716233 which shows a vibration damper mechanism for low resonance frequencies. Said mechanism is used as a base for assemblies which have to be isolated from external mechanical vibrations. Said mechanism comprises C-shaped springs made from a plastic material having a non-linear flexiblity response, a high mechnical hysterisis and a small plastic deformation.

The present invention thus provides a method for improving the life cycle of a torque transmitting spring as set forth in claim 1 and a method of forming C-shaped composite springs as set forth in claims 6 to 8. Preferred embodiments of the invention are disclosed in the dependent claims.

An object of the present invention is to provide an improved composite spring.

Another object of the present invention is to stress the spring in one direction to improve the spring life.

According to further aspects of the invention, the spring is formed from a closed ring having a minor arc portion removed therefrom.

### Brief Description of the Drawings

The torsional vibration damping mechanism of the present invention is shown in the accompanying drawings in which:
Figure 1 is a schematic view of a motor vehicle driveline;
Figure 2 is a detailed, sectional view of the torsional vibration damping mechanism looking along line 2-2 of Figure 3;
Figure 3 is a detailed relief view of a portion of the mechanism looking in the direction of arrow 3 of Figure 2;
Figures 4 and 5 are perspective views of parts in the mechanism;
Figure 6 is a sectional view of a hub assembly looking along line 6-6 of Figure 2.
Figures 7 and 8 are respectively perspective views of a ring and a cylinder of composite material prior to being made into C-shaped springs; and
Figure 9 is an enlarged schematic view of a portion of one of the C-shaped springs illustrating layers of reinforcing filaments protruding from a matrix of plastic material.

### Detailed Description of the Drawings

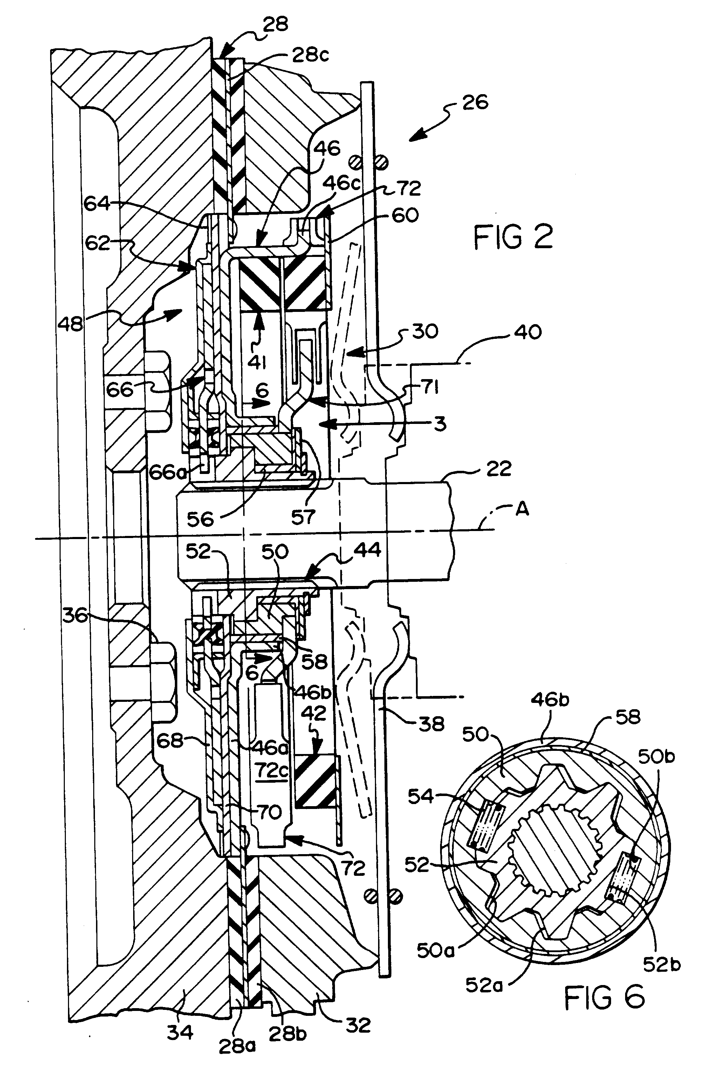

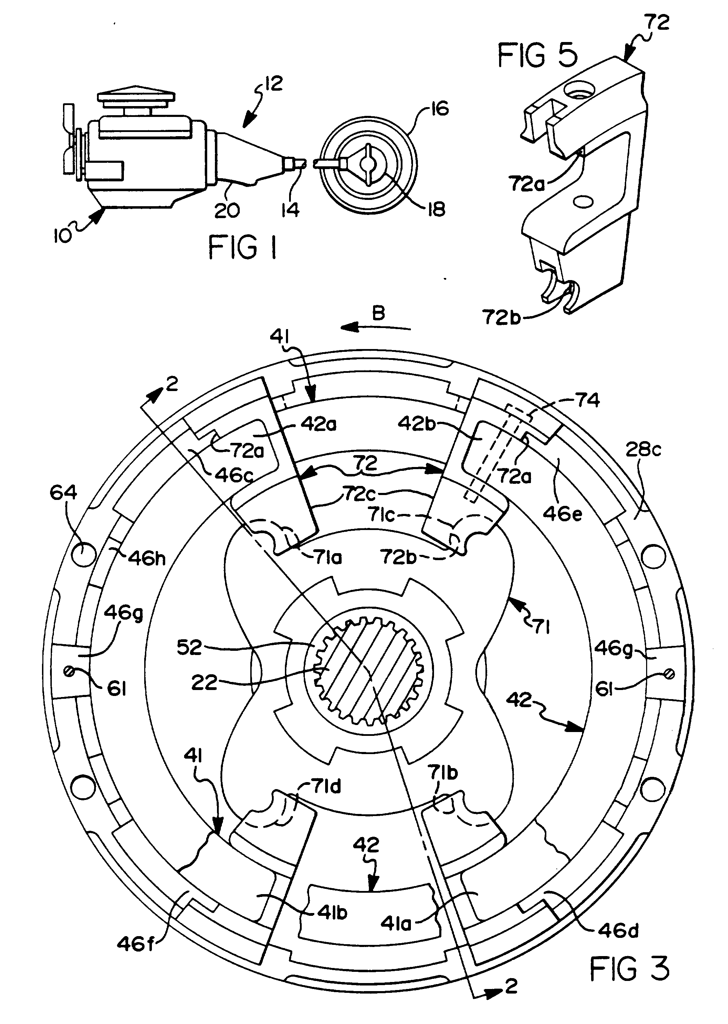

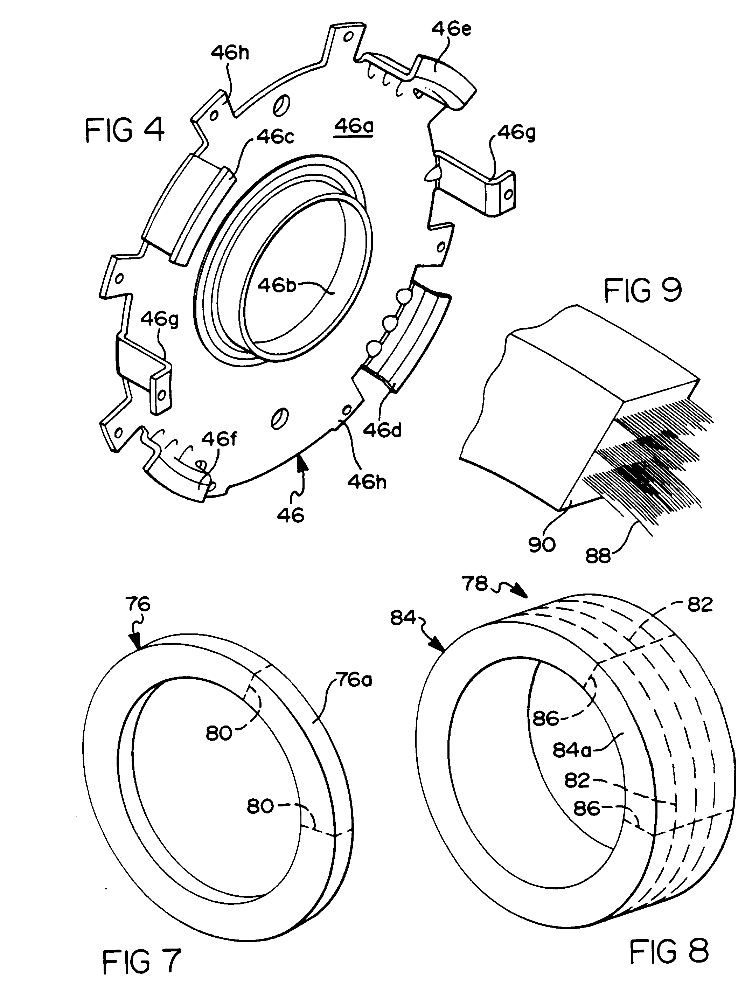

The motor vehicle driveline seen schematically in Figure 1 includes a prime mover 10 and a transmission 12 having an output shaft 14 drivingly connected to a load such as ground engaging wheels 16 via a differential gear assembly 18 for rear and/or front axles of a vehicle. Prime mover 10 is preferably of the internal, periodic combustion type but may be any type of power plant having torque characteristics that are improved by a torsional vibrational damping mechanism. The transmission includes a housing 20 containing a plurality of unshown, constant mesh ratio gears or ratio change mechanism driven by a transmission input shaft or drive 22 partially shown in Figure 2. Well-known ratio change devices or clutches within the transmission are employed to selectively (i.e., manually or automatically) put the transmission into a neutral position wherein the input shaft is not connected to the load or into in-gear positions wherein the input shaft is connected to a load such as wheels 16.

Looking now at Figures 2-6 and primarily at Figures 2 and 3, therein is illustrated a master clutch plate assembly 26 disposed for rotation about the axis A of shaft 22 and in one direction indicated by arrow B in Figure 3 and taken as the direction of positive torque. The clutch plate assembly includes an annular friction ring 28 in driving relation with shaft 22 via a torsional vibration damping mechanism 30 positioned radially between the friction ring and shaft 22. The friction ring includes oppositely facing friction surfaces 28a,28b frictionally connected to an unshown engine output shaft in response to selective axial movement of a pressure plate 32 toward a flywheel 34 secured to an engine output shaft in known manner by partially shown bolts 36. The pressure plate is resiliently pushed into engagement by a diaphragm spring 38 when a schematically illustrated throw-out bearing 40 is in the solid line position and is disengaged when the throw-out bearing is in the phantom line position.

The torsional vibration damping mechanism 30 includes a pair of C-shaped springs 41,42 for attenuating torsionals and transmitting driveline torque, a hub assembly 44, a support member 46, and a viscous damper assembly 48. Damper assemblies other than the viscous shear type disclosed herein may be employed, e.g., the vane damper of previously mentioned U.S. Patent 4,690,256 may be employed.

The hub assembly 44, is similar to the hub assembly in previously mentioned U.S. Patent 4,874,074. The assembly includes outer and inner hub members 50,52 and, as seen in Figure 6, two idle rattle springs 54. The hub members and springs collectively define a hub idle rattle assembly. Outer member 50 has a somewhat Z-shaped cross-section with an inner cylindrical surface journaled on an outer cylindrical surface of inner hub member 52 via a cylindrical portion of a bearing 56. Relative axially movement of the hub members is prevented a thrust washer 57 sandwiched between a radially extending portion of bearing 56 and a snap ring secured in a groove of hub member 50. Inner hub member 52 is slidably splined to shaft 22. The idle rattle portion of the assembly has a plurality of internal spline teeth 50a and two diametrically oppositely disposed recesses 50b defined by hub 50, an equal number of external spline teeth 52a loosely received in teeth 50a and two diametrically oppositely disposed recesses 52b registering with recesses 50b, and the springs 54 for opposing the free play between teeth 50a,52a. Springs 54 are designed to provide a force sufficient to resiliently interconnect the hub members when the transmission is in a neutral position, i.e., when shaft 22 is not connected to a load. Hence, springs 54 are of a relatively low rate or stiffness compared to springs 41,42 which are designed to resiliently transmit substantially maximum normal driveline torque. Hub assembly 44 further includes a plate member 71 affixed to and extending radially outward from outer hub member 50. The plate includes first and second pairs of output drive lugs 71a,71b and 71c,71d which react with springs 41,42.

Support member 46, as best seen in Figure 4, includes a radially extending flange portion 46a having an inner sleeve portion 46b journaled via a sleeve bearing 58 on an outer cylindrical surface of outer hub member 50, first and second pairs of input drive lugs 46c,46d and 46e,46f for reacting with springs 41,42 and defined on the free ends of portions extending axially in cantilever fashion from flange portion 46a, a pair of axially extending brackets 46g for securing a flat ring 60 thereto via fastener 61 shown in cross-section in Figure 3, and six radially extending tabs 46h for securing an inner periphery of a flange 28c of the friction ring and an outer periphery of an annular housing assembly 62 of the viscous damper by fasteners 64. Flat ring 60 prevents rightward axial movement of the adjacent C-shaped spring 42. Ring 60 and washer 57 are removed in Figure 3 to show details of the underlying structure.

Viscous damper assembly 48 includes the annular housing assembly 62 and an annular clutch assembly or viscous shear plate assemblies 66. The damper assembly is preferably of the type disclosed in U.S. Patent 4,914,799. Briefly, the damper housing assembly includes axially spaced apart sidewalls 68,70 defining a chamber filled with a viscous liquid. The clutch or shear plate assembly 66 includes a radially inner portion 66a splined to inner hub member 50 and a radially outer portion having oppositely facing clutching surfaces in close axially spaced relation with surfaces defined by sidewalls 68,70. The housing and clutch surfaces are disposed for clutching coaction therebetween via the viscous shear liquid in response to relative rotation of the housing and clutch assembly. Such relative rotation, of course, occurs in response to flexing of springs 41,42,54 and therefore relative rotation of the damping mechanism input and output defined by support member 46 and hub assembly 44.

C-shaped springs 41,42 each include a first end 41a,42a and a second end 41b,42b. In Figure 3, spring 42 is partially broken away on either side of the six o'clock position to show the first and second ends 41a,41b of spring 41. Each spring end has affixed thereto an end bracket 72. The bracket may be secured in any of several known manners, e.g., an elongated fastener 74 such as illustrated by phantom lines in Figure 3. The brackets with respect to their installed positions each include a radially outwardly extending contact 72a and a radially inwardly extending contact 72b. The radially outer contacts 72a of the brackets affixed to the first and second ends of spring 42 are embraced by circumferentially spaced apart lugs 46c,46e of the first and second pairs of input drive lugs, and in the same manner the contacts 72a of the brackets affixed to the first and second ends of spring 41 are embraced by circumferentially spaced apart lugs 46d,46f of the first and second pairs of input drive lungs. Each bracket also includes a radially extending stop surface 72c. When the brackets are installed, the stop surface limit the number of rotational degrees each spring can flex, therein the stop surfaces are forty degrees apart.

The radially inner contacts 72b of the brackets affixed to the first and second ends of spring 42 are embraced by circumferentially spaced apart lugs 71a,71c of the first and second pairs of output drive lugs, and in the same manner the radially inner contacts 72b of the brackets affixed to the first and second ends of spring 41 are embraced by circumferentially spaced apart lugs 71b,71d of the first and second pairs of output drive lugs. Lugs 71a,71c and 71b,71d are axially offset so as to be aligned with the axial center of springs they are in driving relation with.

C-shaped springs 41,42 are preferably formed from individual rings 76, as is illustrated in Figure 7 or, alternatively, from a cylinder 78 as is illustrated in Figure 8. Ring 76 is formed to the desired axial and radial thickness, and then made into a C-shape by cutting along phantom lines 80 to remove a minor arc portion 76a. Cylinder 78 is formed to the desired radial thickness, then cut along phantom lines 82 into rings 84 of desired axial thickness and then made into a C-shape by cutting along phantom lines 86 to remove a minor arc portion 84a.

Figure 9 schematically illustrates an enlarged portion of one of the C-shaped composite springs with layers of reinforcing filaments 88 protruding from a matrix of plastic material 90. The filaments extend in the direction of curvature of the rings or cylinders. The filaments and layers of filaments are substantially closer together than illustrated and comprise more than 50% of the volume of the composite material. The filaments and the plastic may be any of several known materials. For example, the filaments may be formed of glass, aramids, boron, nylon, etc. The plastic may be formed of epoxides, cyante esters, bismaleimides, thermoset polyimides, thermoplastic polyimides, etc. Good results have been obtained with glass fibers bonded together by an epoxy resin marketed by Shell Oil Company as Shell 9405.

A preferred embodiment of the invention has been disposed for illustrative purposes. Many variations and modifications of the preferred embodiment are believed to be within the scope of the invention defined by the independent claims.

## Claims

1. A method of employing a spring (41) formed of a plurality of layers of reinforcing filaments (88) bonded together by a plastic material (90) for transmitting torque between two rotatable members (46,71) in order to improvie the life cycle of the spring, the spring (41) having a predetermined radius of curvature in the relaxed state and having first and second ends (41a,41b) for transmitting torque to and from the rotatable members (46,71); characterized by:
applying a force and a reacting force to the spring ends (41a, 41b), respectively, only in such a manner that said forces create movement of the spring in directions only decreasing the radius of curvature independent of the sense of rotation of one (46) of the rotatable members (46,71) with respect to the other (71),

2. The method of claim 1, including the step of: forming the spring (41c) in a C-shape.

3. The method of claim 1 or 2, including the step of:
forming the spring as a closed annular ring (76); and
removing a minor arc portion (76a) of the ring (76) to define the first and second ends (41a,41b).

4. The method of claim 1 or 2, including the step of:
forming an elongated cylindrical member (78) of the filaments (88) and plastic material (90); slicing the cylindrical member (78) into a plurality of rings (84) of a substantially desired axial thickness; and
removing a minor arc portion (84a) of each ring to define the first and second ends (41a,41b).

5. The method of any one of the preceeding claims wherein the spring is formed in such a way the layers of reinforcement filaments extend parallel to each other and in the direction of curvature.

6. A method of forming a C-shaped composite spring (41) comprising a plurality of layers of reinforcing filaments (88) bonded together by a plastic material (90) said method comprising the steps of:
forming the layers of reinforcing filaments and plastic material into a closed ring (76); and
removing a minor arc portion (76a) of the ring to define first and second circumferentially spaced apart ends (41a,41b).

7. A method of forming C-shaped composite springs (41) comprising a plurality of layers of reinforcing filaments (88) bonded together by a plastic material (90); said method comprising the steps of:
forming the layers of reinforcing filaments and the plastic material into a cylinder (78);
cutting the cylinder into rings (84) of required axial thickness; and
removing a minor arc portion (84a) of each ring to define first and second circumferentially spaced apart ends (41a,41b).

8. A method of forming C-shaped composite springs from an axially elongated cylindrical member (78) formed of a plurality of layers of reinforcing filaments (88) wound about a rotating spindle and encapsulated in a thermoplastic material (90); said method comprising the steps of: slicing the cylindrical member into a plurality of rings (84) of substantially the desired axial thickness; and
removing a minor arc portion (84a) of each ring to define first and second circumferentially spaced apart ends (41a,41b).

## Patentansprüche

1. Verfahren zum Verwenden einer Feder (41), die aus einer Vielzahl von Lagen bzw. Schichten von Verstärkungsfilamenten bzw. -fasern (88) gebildet ist, die zusammen durch ein Plastikmaterial (90) gebunden bzw. verbunden sind zum Übertragen von Drehmoment zwischen zwei drehbaren Glieder (46, 71), um die Lebensdauer der Feder zu verbessern, wobei die Feder (41) einen vorbestimmten Krümmungsradius im entspannten Zustand besitzt, und wobei sie erste und zweite Enden (41a, 41b) besitzt zum Übertragen von Drehmoment zu den und von den drehbaren Gliedern (46, 71), gekennzeichnet durch folgendes:
Anlegen einer Kraft und einer Reaktionskraft an die Federenden (41a, 41b) jeweils nur in einer solchen Weise, daß die Kräfte eine Bewegung der Feder nur in Richtungen erzeugen, die den Krümmungsradius verkleinern, unabhängig vom Drehsinn des Einen (46) der drehbaren Glieder (46, 71) mit Bezug auf das Andere (71).

2. Verfahren nach Anspruch 1, das den Schritt des Formens der Feder (41c) in eine C-Form aufweist.

3. Verfahren nach Anspruch 1 oder 2, das folgende Schritte aufweist:
Formen der Feder als ein geschlossener ringförmiger Ring (76); und
Entfernen eines kleineren Bogenteils (76a) des Rings (76), um die ersten und zweiten Enden (41a, 41b) zu definieren.

4. Verfahren nach Anspruch 1 oder 2, das folgende Schritte aufweist:
Formen eines langgestreckten Zylindergliedes (78) aus den Filamenten (88) und Plastikmaterial (90), Schneiden des Zylindergliedes (78) in eine Vielzahl von Ringen (84) von im Wesentlichen erwünschten Axialdicke; und
Entfernen eines kleineren Bogenteils (84a) aus jedem Ringe, um die ersten und zweiten Enden (41a, 41b) zu definieren.

5. Verfahren nach einem der vorhergehenden Ansprüche, wobei die Feder in einer solchen Weise geformt ist, daß die Lagen von Verstärkungsfilamenten sich parallel zueinander und in Richtung der Krümmung erstrecken.

6. Verfahren zum Formen einer C-förmigen Kompositfeder (41), die eine Vielzahl von Lagen von Verstärkungsfilamenten (88) aufweist, die zusammen verbunden bzw. gebunden sind durch ein Plastikmaterial (90), wobei das Verfahren folgende Schritte aufweist:
Formen der Lagen von Verstärkungsfilamenten und Plastikmaterial in einen geschlossenen Ring (76); und
Entfernen eines kleineren Bogenteils (76a) des Ringes um erste und zweite umfangsmäßig voneinander beabstandete Enden (41a, 41b) zu definieren.

7. Verfahren zum Formen von C-förmigen Kompositfedern (41), die eine Vielzahl von Lagen von Verstärkungsfilamenten (88) aufweisen, die zusammen durch ein Plastikmaterial (90) verbunden sind, wobei das Verfahren folgende Schritte aufweist:
Formen der Lagen von Verstärkungsfilamenten und des Plastikmaterial zu einem Zylinder (78);
Schneiden des Zylinders in Ringe (84) von erforderlicher axialer Dicke; und
Entfernen eines kleineren Bogenteils (84a) aus jedem Ring um erste und zweite umfangsmäßig voneinander beabstandete Enden (41a, 41b) definieren.

8. Verfahren zum Formen von C-förmigen Kompositfedern aus einem axial langgestreckten Zylinderglied (78), das aus einer Vielzahl von Lagen von Verstärkungsfilamenten (88) geformt ist, die um eine rotierende Spindel herumgewunden bzw. gewickelt sind, und die in einem thermoplastischen Material (90) eingekapselt bzw. eingeschlossen sind, wobei das Verfahren folgende Schritte aufweist:
Schneiden des Zylindergliedes in eine Vielzahl von Ringen (84) von im Wesentlichen der gewünschten Axialdikke; und
Entfernen eines kleineren Bogenteils (84a) aus jedem Ring um erste und zweite voneinander beabstandete Enden (41a, 41b) zu definieren.

## Revendications

1. Procédé utilisant un ressort (41), formé de plusieurs couches de filaments de renforcement (88) liés ensemble par une matière plastique (90), pour transmettre un couple entre deux éléments rotatifs (46, 71) de manière à améliorer la durée de service du ressort, ce ressort (41) ayant un rayon de courbure prédéterminé dans l'état de relaxation et comportant des première et seconde extrémités (41a, 41b) pour transmettre un couple aux éléments rotatifs (46, 71) et à partir de ceux-ci ; caractérisé en ce qu'on applique une force et une force de réaction aux extrémités (41a, 41b) du ressort respectivement seulement d'une manière telle que ces forces créent un mouvement des extrémités de ressort (41a, 41b) dans des directions réduisant seulement le rayon de courbure, indépendamment du sens de rotation d'un (46) des éléments rotatifs (46, 71) par rapport à l'autre (71).

2. Procédé selon la revendication 1, comprenant l'étape consistant à : donner au ressort (41c) une forme de C,.

3. Procédé selon la revendication 1 ou 2, comprenant les étapes consistant à :
- donner au ressort une forme d'anneau fermé (76) comme un anneau fermé (76); et
- enlever une petite partie d'arc (76a) de l'anneau (76) pour définir les première et seconde extrémités (41a, 41b).

4. Procédé selon la revendication 1 ou 2, comprenant les étapes consistant à :
- former un élément cylindrique allongé (78) avec les filaments (88) et la matière plastique (90);
- découper l'élément cylindrique (78) sous forme de plusieurs anneaux (84) ayant une épaisseur axiale sensiblement désirée; et
- enlever une petite partie d'arc (84a) de chaque anneau pour définir les première et seconde extrémités (41a, 41b).

5. Procédé selon une quelconque des revendications précédentes, dans lequel le ressort est formé d'une manière telle que les couches de filaments de renforcement s'étendent parallèlement entre elles et dans la direction de courbure.

6. Procédé de fabrication d'un ressort composite (41) en forme de C, comprenant plusieurs couches de filaments de renforcement (88) liés ensemble par une matière plastique (90), ledit procédé comprenant les étapes consistant à :
- former les couches de filaments de renforcement et de matière plastique pour créer un anneau fermé (76); et
- enlever une petite partie d'arc (76a) de l'anneau pour définir des première et seconde extrémités (41a, 41b) espacées circonférentiellement l'une de l'autre.

7. Procédé de fabrication de ressorts composites (41) en forme de C, comprenant plusieurs couches de filaments de renforcement (88) liés ensemble par une matière plastique (90), ledit procédé comprenant les étapes consistant à:
- former les couches de filaments de renforcement et de matière plastique pour créer un cylindre (78);
- découper le cylindre en anneaux (84) ayant l'épaisseur axiale requise ; et
- enlever une petite partie d'arc (84a) de chaque anneau pour définir des première et seconde extrémités (41a, 41b) espacées circonférentiellement l'une de l'autre.

8. Procédé de fabrication de ressorts composites en forme de C à partir d'un élément cylindrique (78) allongé axialement et formé de plusieurs couches de filaments de renforcement (88) enroulés autour d'une broche tournante et enrobés dans une matière thermoplastique (90); ledit procédé comprenant les étapes consistant à :
- découper l'élément cylindrique sous forme de plusieurs anneaux (84) ayant sensiblement l'épaisseur axiale désirée ; et
- enlever une petite partie d'arc (84a) de chaque anneau pour définir des première et seconde extrémités (41a, 41b) espacées circonférentiellement l'une de l'autre.
